# EUROPÄISCHE PATENTSCHRIFT

(11) **EP 2 902 265 B1**
(45) Veröffentlichungstag und Bekanntmachung des Hinweises auf die Patenterteilung: **19.07.2017**
(21) Anmeldenummer: 14004344.9
(22) Anmeldetag: 20.12.2014
(51) Int. Cl.: B60R 11/02, F16M 11/00

(54) **Bildschirmhalterung**
Monitor holder
Support d'écran

(30) Priorität: 29.01.2014 DE 102014001103
(43) Veröffentlichungstag der Anmeldung: 05.08.2015
(73) Patentinhaber: MAN Truck & Bus AG, 80995 München (DE)
(72) Erfinder: Jarschel, Frank, 73450 Neresheim (DE); Hanöfner, Roman, 80796 München (DE); Gundelsheimer, Wolfram, 85757 Karlsfeld (DE); Menacher, Moritz, 80687 München (DE)
(74) Vertreter: v. Bezold & Partner Patentanwälte - PartG mbB

(56) Entgegenhaltungen:
- WO-A2-2006/132938
- DE-A1-102010 005 193
- DE-A1-102010 033 398
- US-A1- 2004 004 378
- US-A1- 2012 047 711
- US-A1- 2013 068 901

## Beschreibung

Die Erfindung betrifft eine Bildschirmhalterung für ein Fahrzeug, insbesondere für einen Omnibus.

Omnibusse können zur Information oder Unterhaltung der Fahrgäste mit Flachbildschirmen, die im Mittelgang knapp unterhalb der Innenraumdecke angeordnet sind, ausgestattet oder nachgerüstet werden. Die Innenraumdecke ist Teil der sog. Dachvoute des Omnibusses. Aus funktionaler Sicht ist die Außenseite der Dachvoute für die wasserdichte Verbindung von Seitenwand und Fahrzeugdach zuständig, während die Innenseite beispielsweise Öffnungen, Gepäckablagen, Beleuchtungskörper, Belüftungselemente etc. enthalten kann. Zwischen den beiden getrennten Elementen finden sich Installationen der Fahrzeugtechnik wie z. B. Wasser- und Klimarohre, elektrische Leitungen oder Anschlussleitungen für einen Bildschirm.

Zur Anordnung von einem oder mehreren Flachbildschirmen im Mittelgang knapp unterhalb der Innenraumdecke ist es aus der Praxis bekannt, eine Bildschirmhalterung bereitzustellen, bei der ein Trägerrohr am Bildschirmgehäuse befestigt wird. Das Trägerrohr wird ferner an seinen Endbereichen an den links- und rechtsseitigen Innenmodulen der Dachvoute befestigt. Das Rohr weist hierzu endseitig Halterungen für die Befestigung an einer Haltestangenspur, die jeweils links- und rechtsseitig entlang der Innenseite der Dachvoute in Längsrichtung des Busses verläuft, auf. Dadurch kann die Montageposition des Bildschirms in Längsrichtung des Busses durch Wahl der Verschraubungsposition an der Haltestangenspur festgelegt werden. Im montierten Zustand erstreckt sich das Trägerrohr senkrecht zur Längsachse des Omnibusses. Der Hohlraum des Rohres wird für die Kabelführung zum Anschluss des Bildschirms genutzt.

Nachteilig an dieser bekannten Bildschirmhalterung ist, dass die Kabelmontage nur ohne Stecker möglich ist, da beispielsweise ein VGA-Stecker des Bildschirms zu groß für den Durchmesser des Trägerrohrs ist. Demzufolge müssen derartige Stecker nachträglich angelötet werden, was zusätzliche Zeitaufwände und mögliche Fehlerquellen beim Montagevorgang verursacht.

Um das Bildschirmkabel an der Rückseite des Bildschirmgehäuses anschließen zu können, ist es ferner notwendig, eine Bohrung im Querrohr einzubringen, um eine Kabelführung aus dem Rohr heraus und zum Bildschirmgehäuse zu ermöglichen. Ein weiterer Nachteil ist, dass bei der Verwendung eines derartigen Rohres eine nachträgliche Kabelmontage im Fahrzeug nicht möglich ist. Bei einer Kabelführung, die nicht innerhalb des Trägerrohres, sondern außen anliegend an diesem verläuft, besteht andererseits die Gefahr von Vandalismus.

Aus der Offenlegungsschrift DE 10 2010 033 398 A1 ist ein Halteelement bekannt, das als Trägerstange ausgeführt ist und ein Befestigungsmittel aufweist, um einen Bildschirm an dem Halteelement anzuordnen.

Es ist somit eine Aufgabe der Erfindung, eine verbesserte Bildschirmhalterung bereitzustellen, mit der Nachteile herkömmlicher Bildschirmhalterungen vermieden werden können. Die Aufgabe der Erfindung ist es insbesondere, eine Bildschirmhalterung für ein Fahrzeug, insbesondere eine Bildschirmhalterung für einen Omnibus, bereitzustellen, die eine schnelle und flexible Montage eines im Fahrzeuginneren aufgehängten Bildschirms ermöglicht.

Diese Aufgaben werden durch eine Bildschirmhalterung gemäß den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Erfindungsgemäß wird eine Bildschirmhalterung für ein Fahrzeug, insbesondere eine Bildschirmhalterung für einen Omnibus vorgeschlagen, mit einer Trägerstange, die als Nutrohr ausgeführt ist, und Befestigungsmittel, mittels derer die Trägerstange sowohl an dem Bildschirm, insbesondere einem Flachbildschirm, als auch im Fahrzeuginneren befestigbar ist.

Im Gegensatz zu einem konventionellen Trägerrohr, bei dem die Bildschirmkabel zur Montage an einem Ende des Hohlkörpers eingeführt und in Längsrichtung durchgezogen werden müssen, hat ein Nutrohr den Vorteil, dass das oder die Bildschirmkabel in die Nut eingelegt werden können. Ein besonderer Vorzug der Erfindung besteht somit darin, dass Bildschirmkabel mit endseitig angeschlossenen Kabelsteckern angeschlossen werden können, auch wenn die Abmessungen der Kabelstecker wesentlich größer als der Durchmesser der Nut bzw. der Trägerstange sind. Vorzugsweise ist somit zumindest ein Bildschirmkabel in der Nut des Nutrohrs gehaltert.

Zum Schutz der in die Nut eingelegten Kabel kann eine Abdeckung vorgesehen sein, die zum Abdecken der Nut auf dem Nutrohr lösbar anbringbar ist. Bei einer vorteilhaften Variante dieser Ausgestaltungsform ist die Abdeckung mittels eines Klemm- und/oder Rastmechanismus auf der Nut anbringbar. Dies ermöglicht eine schnelle Montage oder Austausch des Kabels bei einem Defekt.

Die Erfindung ist hinsichtlich des konstruktiven Aufbaus der Befestigungsmittel nicht auf eine bestimmte Wahl oder einen bestimmten Aufbau der Befestigungsmittel beschränkt, sofern diese geeignet sind, das Nutrohr sowohl am Bildschirmgehäuse als auch an einer geeigneten Stelle im Fahrzeuginnenraum zu befestigen.

Gemäß einer bevorzugten Ausgestaltungsform umfassen die Befestigungsmittel mindestens ein erstes Halteelement, mit einem ersten Endbereich, der an einem Bildschirmgehäuse befestigbar ist, und einem zweiten Endbereich, der in die Nut des Nutrohrs eingreift und im Inneren der Nut am Nutrohr befestigbar und/oder befestigt ist. Dies ermöglicht einen platzsparenden Befestigungsmechanismus, der ferner den Vorteil bietet, dass die Befestigung des ersten Halteelements am Nutrohr im Nutinneren angeordnet ist und somit von außen weder sichtbar noch zugänglich ist und somit einen zusätzlichen Vandalismusschutz bietet.

Bei einer vorteilhaften Variante dieser Ausgestaltungsform weist der vorgenannte zweite Endbereich einen ersten Abschnitt auf, der an einer Innenwand der Nut anliegt, und einen zweiten Abschnitt, der am Boden der Nut mittels einer Fläche unter dem Kopf einer Schraube festgeklemmt ist. Diese Variante ermöglicht ein sicheres und platzsparendes Befestigen der Halterung am Nutrohr.

Eine Möglichkeit der erfindungsgemäßen Realisierung sieht vor, die Trägerstange als Nutrohr mit einer Einfachnut auszuführen. Gemäß dieser Ausführungsvariante werden alle Kabel, die zum Anschluss des Bildschirms benötigt werden, in einer Nut gehaltert. Vorzugsweise werden vier Bildschirmkabel in der Nut gehaltert.

Eine weitere Alternative dieser Ausführungsform sieht vor, dass die Trägerstange eine C-Profilschiene umfasst bzw. in diese integriert ist, wobei die beiden einen C-Profilschlitz begrenzenden Frontschenkel der C-Profilschiene den Boden der Nut bilden.

Vorzugsweise ist in der Profilschiene mindestens ein Nutstein, weiter vorzugsweise zwei Nutsteine, verschiebbar gelagert, aufweisend jeweils eine Gewindebohrung zur Aufnahme der Schraube, mittels der der zweite Endbereich des ersten Halteelements an dem Nutrohr befestigt wird.

Diese Ausführungsvariante mit C-Profilschiene und Nutstein bietet den Vorteil, dass die Haltevorrichtung an verschiedene Bildschirmbreiten leicht angepasst werden kann, da lediglich die Nutsteine in Längsrichtung des Nutrohrs verfahren werden müssen. Ferner ist der Befestigungsmechanismus der ersten Halterung an dem Nutrohr vollständig im Inneren des Nutrohrs gekapselt und im montierten Zustand von außen nicht sichtbar.

Gemäß einer weiteren bevorzugten Ausgestaltungsform kann die Trägerstange als Doppelnutrohr ausgeführt sein. Beispielsweise kann die Trägerstange (ohne die Abdeckungen) gemäß dieser Ausführungsform im Querschnitt ein Doppel-T-Profil aufweisen.

Vorzugsweise ist in jeder der beiden Nuten des Doppelnutrohrs mindestens ein Bildschirmkabel gehaltert. Weiter vorzugsweise sind in jeder der beiden Nuten des Doppelnutrohrs zwei Bildschirmkabel gehaltert.

Zur Abdeckung des Doppelnutrohrs ist es vorteilhaft, eine Abdeckung für jede der beiden Nuten vorzusehen. Die Abdeckung für eine Nut des Doppelnutrohrs oder des Einfachnutrohrs ist vorzugsweise als Kunststoffabdeckung ausgebildet.

Gemäß einem weiteren Aspekt der Erfindung umfassen die Befestigungsmittel zweite Halteelemente, die jeweils endseitig an der Trägerstange angeordnet sind zur Befestigung der Trägerstange an einer Innenseite einer Dachvoute des Fahrzeugs, insbesondere zur Befestigung in einer Haltestangenspur eines Omnibusses.

Ein weiterer Aspekt der Erfindung betrifft ein Fahrzeug, insbesondere einen Omnibus, beispielsweise einen Reisebus, mit einer Bildschirmhalterung nach einem der vorhergehenden Ansprüche.

Weitere Einzelheiten und Vorteile der Erfindung werden im Folgenden unter Bezug auf die beigefügten Zeichnungen beschrieben. Es zeigen:
- Figur 1: eine perspektivische Ansicht einer Bildschirmhalterung mit Bildschirm gemäß einem ersten Ausführungsbeispiel;
- Figur 2: eine Vorderansicht der Figur 1;
- Figur 3: einen Querschnitt entlang der Ebene A-A der Figur 2;
- Figur 4: eine perspektivische Ansicht einer Bildschirmhalterung mit Bildschirm gemäß einem zweiten Ausführungsbeispiel;
- Figur 5: eine Vorderansicht der Figur 4; und
- Figur 6: einen Querschnitt entlang der Ebene A-A der Figur 5.

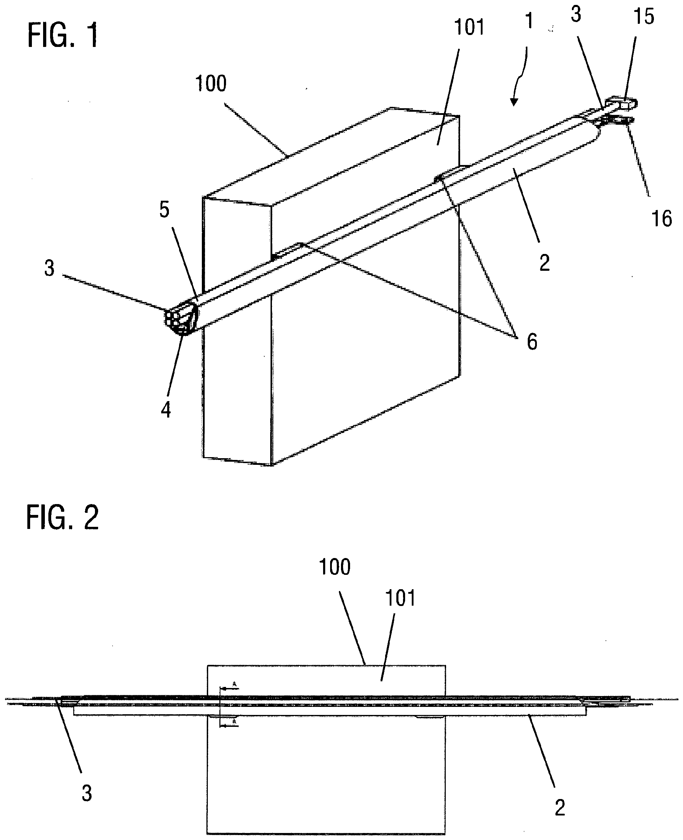

Die Figuren 1 und 2 zeigen ein erstes Ausführungsbeispiel, bei dem die Trägerstange der Bildschirmhalterung als Nutrohr 2 mit Einfachnut ausgebildet ist.

Der Bildschirm 100 ist schematisch dargestellt und kann beispielsweise ein TFT-Flachbildschirm sein. Die Bildschirmhalterung 1 ist an der Rückseite 101 des Bildschirms 100 am Gehäuse befestigt.

In dem Nutrohr 2 mit Einfachnut sind vier Bildschirmkabel 3 geführt. Die Nut 4 ist mit einer lösbaren Abdeckung 5 verschlossen, deren Länge an die Länge des Nutrohrs 2 angepasst ist.

Ferner sind zwei erste Halterungen 6 vorgesehen, die nahe an den Außenkanten des Bildschirmgehäuses befestigt werden, beispielsweise durch Verschrauben mit dem Bildschirmgehäuse. Die Halterungen 6 sind ferner an dem Nutrohr 2 befestigt, was nachfolgend noch detaillierter beschrieben wird.

Figur 1 zeigt ferner einen Stecker 15, z. B. VGA-Stecker, am Ende eines Datenkabels. Dieser Stecker wird an der Dachvoute mit einem weiteren Bildschirmkabel, einer Anschlussbuchse oder einer Recheneinheit verbunden, die die Bildschirmsignale liefern. Die Erfindung ist hinsichtlich der Art und des konstruktiven Aufbaus nicht auf einen bestimmten Steckertyp (VGA, DVI, etc.) beschränkt.

An dem Nutrohr 2 sind innenseitig ferner zweite Halteelemente 16 angeordnet, zur Befestigung der Trägerstange 2 an einer Innenseite einer Dachvoute eines Fahrzeugs, insbesondere zur Befestigung in einer Haltestangenspur einer Dachvoute eines Omnibusses (nicht dargestellt). Figur 1 zeigt nur den Halter 16 am rechten Ende des Nutrohrs 2. Der Halter kann z. B. als Metallplatte mit Durchgangsbohrungen ausgebildet sein. Das Nutrohr 2 umfasst ferner einen Halter 16 am linken Ende des Nutrohrs 2 (nicht gezeigt), so dass das Nutrohr 2 senkrecht zur Längsrichtung eines Busses quer über den Mittelgang aufgehängt werden kann, wobei die Halter 16 an der links- und rechtsseitigen Haltestangespur der Dachvoute verschraubt werden.

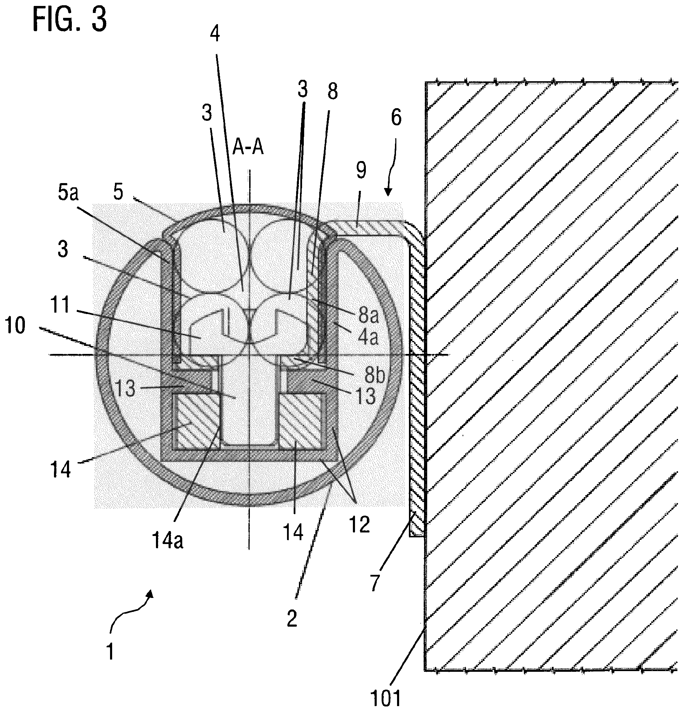

Der konstruktive Aufbau der Bildschirmhalterung ist in der Schnittansicht der Figur 3 detaillierter gezeigt.

Im vorliegenden Ausführungsbeispiel hat das Nutrohr im Querschnitt eine kreisförmige Umfangsform, in die eine U-förmige Nut 4 mit geraden Seitenwänden 4a eingebracht ist.

In der Nut 4 sind vier Bildschirmkabel in zwei Schichten zu je zwei Kabeln 3 gehaltert. Das Nutrohr 2 ist mit einem ersten Halteelement 6 am Gehäuse einer Bildschirmrückseite 101 befestigt. Die erste Halterung 6 weist hierbei einen ersten plattenförmigen Endbereich 7 auf, der flächig am Bildschirmgehäuse 101 anliegt und beispielsweise mit diesem verschraubt ist.

Ein an den ersten Endbereich 7 anschließender Mittelbereich 9 erstreckt sich in senkrechter Richtung vom Gehäuse ab. An den Mittelbereich 9 schließt sich der zweite Endbereich 8 des ersten Halteelements 6 an, der in die Nut 4 eingreift und im Inneren der Nut 4 an einer Innenwand 4a der Nut 4 mit einem ersten Abschnitt 8a anliegt. Der erste Abschnitt 8a erstreckt sich entlang der Nutseitenwand 4a bis zum Boden der Nut 4. Am Boden ist ein zweiter Abschnitt 8b angeformt, der sich um ca. 90 Grad nach innen krümmt und sich entlang des Nutbodens erstreckt.

Das Nutrohr 2 umfasst ferner eine C-Profilschiene 12, die unterhalb der Nut angeordnet ist, derart, dass die beiden den C-Profilschlitz begrenzenden Frontschenkel 13 der Profilschiene 12 den Boden der Nut 4 bilden. Hierbei ist sicherzustellen, dass die Breite des C-Profilschlitzes kleiner als der Durchmesser eines Kabels 3 ist. In der Profilschiene 12 sind zwei Nutsteine 14 verschiebbar gelagert und weisen jeweils eine Gewindebohrung 14a auf. Mittels einer Schraube 10 wird das erste Halteelement 6 am Nutrohr 2 befestigt, indem der untere Abschnitt 8b der ersten Halterung 6, der sich entlang des Nutbodens erstreckt, mittels einer Ringfläche unter dem Kopf 11 einer Festsetzschraube 10 festgeklemmt wird. Hierbei greift die Festsetzschraube 10 (abgesehen vom Kopf 11) durch den Schlitz zwischen den Frontschenkeln 13 der C-Profilschiene 12 hindurch und in die Gewindebohrung 14a des Nutsteins ein und wird mit diesem verschraubt. Die Gesamthöhe des Nutsteins 14 ist etwas kleiner als die Höhe der C-Profilschiene 12 gewählt.

Durch Verschieben des Nutsteins in Längsrichtung des Nutrohrs 2 kann die Montageposition am Bildschirmgehäuse variiert werden. Nachdem, wie zuvor beschrieben, zwei Halteelemente 6 sowohl über ihre ersten Endbereiche 7 am Bildschirmgehäuse als auch über ihre zweiten Endbereiche 8a, 8b mittels der Schraube 10 und dem Nutstein 14 am Nutrohr 2 verschraubt wurden, werden die Bildschirmkabel 3 von oben in die Nut 4 eingelegt. Anschließend wird eine Abdeckung 5 von oben zum Verschließen des Nutrohrs eingeklemmt bzw. eingeklipst. Die Abdeckung 5 ist dabei so ausgeführt, dass ein im montierten Zustand außen liegender Abschnitt 5b beim Auflegen auf die Nut eine geschlossene Zylindermantelfläche des Nutröhres 2 ergibt. Mit anderen Worten ist die Breite und Krümmung des Abschnitts an die Nutabmessungen angepasst. Ferner umfasst die Abdeckung 5 zwei Flanschflächen 5a, deren Abstand etwas größer als die Nutbreite gewählt wird und die entlang der Seitenwände 4a der Nut 4 eingeschoben werden und somit mit der Nut verklemmt sind.

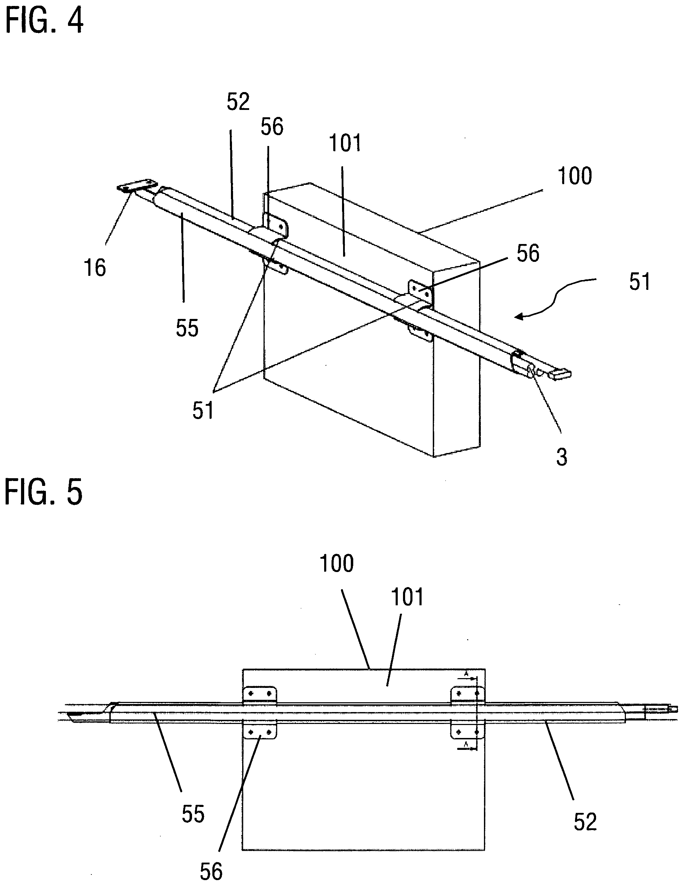

Die Figuren 4 bis 6 zeigen eine Abwandlung des Ausführungsbeispiels gemäß der Figuren 1 bis 3, so dass zur Vermeidung von Wiederholungen auf die vorstehende Beschreibung verwiesen wird, wobei für entsprechende Einzelheiten dieselben Bezugszeichen verwendet werden.

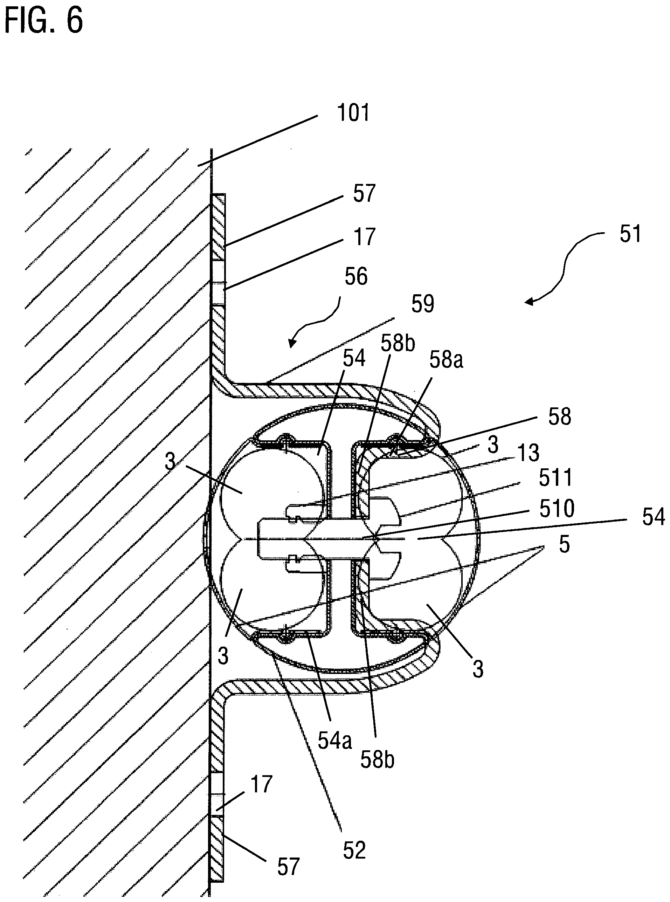

Eine Besonderheit dieses Ausführungsbeispiels besteht darin, dass die Bildschirmhalterung ein Nutrohr 52 umfasst, das statt mit einer Einfachnut mit einer Doppelnut ausgeführt ist. Mit anderen Worten weist die Trägerstange (ohne Abdeckung) im Querschnitt ein Doppel-T-Profil auf. Dies ist in der Querschnittsansicht in Figur 6 gezeigt, die den pilzförmigen oberen und unteren Abschnitt des Doppelnutrohrs 52 zeigt, die über einen Steg verbunden sind (Doppel-T-Profil bzw. H-Profil).

Es sind somit zwei Nuten 54 vorgesehen. Im vorliegenden Ausführungsbeispiel sind die Nuten 54 so dimensioniert, dass jeweils zwei Bildschirmkabel 3 in einer der Nuten 54 gehaltert werden können, wie in Figur 6 illustriert ist.

Das Doppelnutrohr 52 ist wiederum über ein erstes Halteelement 56 am Bildschirmgehäuse 101 befestigt. Hierbei ist ein erster plattenförmiger Endbereich 57 des Halteelements 56 mit dem Bildschirmgehäuse verschraubt und weist hierzu Durchgangsbohrungen 17 zur Aufnahme einer Schraube auf. Das erste Halteelement 56 umgreift das Doppelnutrohr 2 mittels eines sich an den ersten Endbereich 57 anschließenden mittleren Bereichs 59 und greift mit einem sich daran anschließenden zweiten Endbereich 58 in die auf der abgewandten Seite des Bildschirmgehäuses 101 liegende Nut 54a ein. Wie in dem zuvor beschriebenen ersten Ausführungsbeispiel erstreckt sich der zweite Endbereich 58 dabei mittels eines ersten Abschnitts 58a entlang der Seitenwand 54a der Nut 54 und mittels eines zweiten Abschnitts 58b anschließend entlang des Nutbodens.

Hierbei wird der zweite Abschnitt 58b wiederum mittels einer Schraube 510 mit dem Doppelnutrohr 52 verschraubt. Hierbei hält eine Mutter 13 in der gegenüberliegenden Nut das Schraubende.

Obwohl die Erfindung unter Bezugnahme auf bestimmte Ausführungsbeispiele beschrieben worden ist, ist eine Vielzahl von Varianten und Abwandlungen möglich, die ebenfalls von dem Erfindungsgedanken Gebrauch machen und deshalb in den Schutzbereich fallen. Folglich soll die Erfindung nicht auf die offenbarten bestimmten Ausführungsbeispiele begrenzt sein, sondern die Erfindung soll alle Ausführungsbeispiele umfassen, die in den Bereich der beigefügten Patentansprüche fallen.

### Bezugszeichenliste

- 1, 51: Bildschirmhalterung
- 2, 52: Nutrohr
- 3: Bildschirmkabel
- 4, 54: Nut
- 4a, 54a: Seiteninnenwand der Nut
- 5: Abdeckung
- 5a: Klemmflächen der Abdeckung
- 5b: Außenabschnitt der Abdeckung
- 6, 56: Erstes Halteelement
- 7, 57: Erster Endbereich des ersten Halteelements
- 8, 58: Zweiter Endbereich des ersten Halteelements
- 8a, 58a: Erster Abschnitt des zweiten Endbereichs
- 8b, 58b: Zweiter Abschnitt des zweiten Endbereichs
- 9, 59: Mittlerer Abschnitt des ersten Halteelements
- 10, 510: Schraube
- 11, 511: Schraubenkopf
- 12: C-Profilschiene
- 13: Mutter
- 14: Nutstein
- 14a: Gewindebohrung
- 15: Stecker
- 16: Zweites Halteelement
- 17: Durchgangsbohrung
- 100: Bildschirm
- 101: Rückseite Bildschirmgehäuse

## Patentansprüche

1. Bildschirmhalterung (1) für ein Fahrzeug, insbesondere für einen Omnibus, umfassend
eine Trägerstange; und
Befestigungsmittel, mittels derer die Trägerstange an einem Bildschirm (100), insbesondere einem Flachbildschirm, und im Fahrzeuginneren befestigbar ist, wobei die Trägerstange als Nutrohr (2) ausgeführt ist, **dadurch gekennzeichnet,**
**dass** die Trägerstange als Nutrohr (2) mit einer Einfachnut (4) ausgeführt ist; und dass die Trägerstange eine C-Profilschiene (12) umfasst, wobei die beiden einen C-Profilschlitz begrenzenden Frontschenkel (13) der C-Profilschiene den Boden der Nut (4) bilden.

2. Bildschirmhalterung nach Anspruch 1, **gekennzeichnet durch** mindestens ein Bildschirmkabel (3), das in der Nut (4) des Nutrohrs (2) gehaltert ist.

3. Bildschirmhalterung nach Anspruch 1 oder 2, **gekennzeichnet durch** eine Abdeckung (5), die zum Abdecken der Nut (4) auf dem Nutrohr (2) lösbar anbringbar ist.

4. Bildschirmhalterung nach Anspruch 3, **dadurch gekennzeichnet, dass** die Abdeckung (5) mittels eines Klemm- und/oder Rastmechanismus auf der Nut (4) anbringbar ist.

5. Bildschirmhalterung nach einem der vorhergehenden Ansprüche, **dadurch gekennzeichnet, dass** die Befestigungsmittel mindestens ein erstes Halteelement (6) umfassen, umfassend einen ersten Endbereich (7), der an einem Bildschirmgehäuse (101) befestigbar ist, und einen zweiten Endbereich (8), der in die Nut (4) eingreift und im Innern der Nut (4) am Nutrohr (2) befestigbar und/oder befestigt ist.

6. Bildschirmhalterung nach Anspruch 5, **dadurch gekennzeichnet, dass** der zweite Endbereich (8) einen ersten Abschnitt (8a) aufweist, der an einer Innenwand (4a) der Nut (4) anliegt und einen zweiten Abschnitt (8b) aufweist, der am Boden der Nut (4) mittels einer Fläche unter dem Kopf (11) einer Schraube (10) festgeklemmt ist.

7. Bildschirmhalterung nach einem der vorhergehenden Ansprüche, **dadurch gekennzeichnet, dass** in der C-Profilschiene (12) mindestens ein Nutstein (14) verschiebbar gelagert ist, aufweisend eine Gewindebohrung (14a) zur Aufnahme der Schraube (10).

8. Bildschirmhalterung nach einem der vorhergehenden Ansprüche, **dadurch gekennzeichnet,**
(a) **dass** die Befestigungsmittel zweite Halteelemente (16) umfassen, die jeweils endseitig an der Trägerstange (2) angeordnet sind zur Befestigung der Trägerstange (2) an einer Innenseite einer Dachvoute des Fahrzeugs, insbesondere zur Befestigung in einer Haltestangenspur eines Omnibusses; und/oder
(b) **dass** die Abdeckung der Nut (4) als Kunststoffabdeckung ausgebildet ist.

9. Fahrzeug, insbesondere Omnibus, mit einer Bildschirmhalterung nach einem der vorhergehenden Ansprüche.

## Claims

1. Screen holder (1) for a vehicle, in particular for an omnibus, comprising
a support rod; and
fastening means, by means of which the support rod is able to be fastened to a screen (100), in particular a flat screen, and in the vehicle interior, wherein the support rod is designed as a grooved tube (2),
**characterized**
**in that** the support rod is designed as a grooved tube (2) with a single groove (4); and in that the support rod comprises a C-shaped profiled rail (12), wherein the two front limbs (13) of the C-shaped profiled rail, defining a C-shaped profiled slot, form the base of the groove (4).

2. Screen holder according to Claim 1, **characterized by** at least one screen cable (3) which is retained in the groove (4) of the grooved tube (2).

3. Screen holder according to Claim 1 or 2, **characterized by** a cover (5) which is able to be releasably attached to the grooved tube (2) for covering the groove (4).

4. Screen holder according to Claim 3, **characterized in that** the cover (5) is able to be attached to the groove (4) by means of a clamping and/or latching mechanism.

5. Screen holder according to one of the preceding claims, **characterized in that** the fastening means comprise at least one first retaining element (6) with a first end region (7) which is able to be fastened to a screen housing (101) and a second end region (8) which engages in the groove (4) and is able to be fastened and/or is fastened to the grooved tube (2) inside the groove (4).

6. Screen holder according to Claim 5, **characterized in that** the second end region (8) has a first portion (8a) which bears against an inner wall (4a) of the groove (4) and a second portion (8b) which is clamped on the base of the groove (4) by means of a surface below the head (11) of a screw (10).

7. Screen holder according to one of the preceding claims, **characterized in that** at least one sliding block (14) is displaceably mounted in the C-shaped profiled rail (12), comprising a threaded bore (14a) for receiving the screw (10).

8. Screen holder according to one of the preceding claims, **characterized in that**,
(a) the fastening means comprise second retaining elements (16) which in each case are arranged at the end on the support rod (2) for fastening the support rod (2) to an inner face of a roof coving of the vehicle, in particular for fastening in a retaining rod track of an omnibus; and/or
(b) the cover of the groove (4) is configured as a plastics cover.

9. Vehicle, in particular an omnibus, comprising a screen holder according to one of the preceding claims.

## Revendications

1. Support d'écran (1) pour un véhicule, en particulier pour un omnibus, comprenant :
une barre de support ; et
des moyens de fixation au moyen desquels la barre de support peut être fixée sur un écran (100), en particulier un écran plat, et à l'intérieur du véhicule, la barre de support étant réalisée sous forme de tube à rainure (2),
**caractérisé en ce que**
la barre de support est réalisée sous forme de tube à rainure (2) avec une rainure simple (4) et **en ce que** la barre de support comprend un rail profilé en C (12), les deux branches avant (13), limitant une fente profilée en C du rail profilé en C, formant le fond de la rainure (4).

2. Support d'écran selon la revendication 1, **caractérisé par** au moins un câble d'écran (3) qui est retenu dans la rainure (4) du tube à rainure (2) .

3. Support d'écran selon la revendication 1 ou 2, **caractérisé par** un recouvrement (5) qui peut être appliqué de manière amovible sur le tube à rainure (2) pour recouvrir la rainure (4) .

4. Support d'écran selon la revendication 3, **caractérisé en ce que** le recouvrement (5) peut être appliqué sur la rainure (4) au moyen d'un mécanisme de serrage et/ou d'encliquetage.

5. Support d'écran selon l'une quelconque des revendications précédentes, **caractérisé en ce que** les moyens de fixation comprennent au moins un premier élément de retenue (6) comprenant une première région d'extrémité (7) qui peut être fixée à un boîtier d'écran (101), et une deuxième région d'extrémité (8) qui vient en prise dans la rainure (4) et qui peut être et/ou est fixée à l'intérieur de la rainure (4) sur le tube à rainure (2).

6. Support d'écran selon la revendication 5, **caractérisé en ce que** la deuxième région d'extrémité (8) présente une première portion (8a) qui s'applique contre une paroi interne (4a) de la rainure (4) et présente une deuxième portion (8b) qui est serrée fixement au fond de la rainure (4) au moyen d'une surface sous la tête (11) d'une vis (10) .

7. Support d'écran selon l'une quelconque des revendications précédentes, **caractérisé en ce qu'**au moins un coulisseau (14) est supporté de manière déplaçable dans le rail profilé en C (12), lequel présente un alésage fileté (14a) pour recevoir la vis (10).

8. Support d'écran selon l'une quelconque des revendications précédentes, **caractérisé en ce que**
(a) les moyens de fixation comprennent des deuxièmes éléments de retenue (16) qui sont à chaque fois disposés du côté de l'extrémité sur la barre de support (2) pour la fixation de la barre de support (2) sur un côté interne d'une voute de toit du véhicule, en particulier pour la fixation dans une piste de barre de retenue d'un omnibus ; et/ou
(b) le recouvrement de la rainure (4) est réalisé sous forme de recouvrement en plastique.

9. Véhicule, en particulier omnibus, comprenant un support d'écran selon l'une quelconque des revendications précédentes.
